# EUROPÄISCHE PATENTANMELDUNG

(11) **EP 0 628 398 A2**
(43) Veröffentlichungstag der Anmeldung: **14.12.1994**
(21) Anmeldenummer: 94108106.9
(22) Anmeldetag: 25.05.1994
(51) Int. Cl.: B29C 49/18, B29C 49/16

(54) **Verfahren zur Herstellung von Flachflaschen**

(30) Priorität: 08.06.1993 DE 4319075
(71) Anmelder: FISCHER, Rainer, D-34414 Warburg (DE)
(72) Erfinder: FISCHER, Rainer, D-34414 Warburg (DE)
(74) Vertreter: Prietsch, Reiner, Dipl.-Ing.

(57) **Zusammenfassung**

Die Anfordrung an die Genauigkeit der Einhaltung der Verfahrensparameter bei der Herstellung von Flachflaschen aus einem extrudierten und zweistufig geblasenen Kunststoffschlauch können gesenkt werden, wenn der in der ersten Blasstufe erzeugte Zwischenformling ab dem Zeitpunkt seiner Entlüfung in der Zwischenform bis zu der Beaufschlagung mit Blasluft in der Endblasform unter einem Stützluftdruck gehalten wird. Hierzu kann die Blaspinole der Extrusionsblasmaschine entweder mit einem zusätzlichen Absperrventil nahe der Blasöffnung ausgerüstet werden oder ein Spezialventil umfassen, das in dem Zwischenformling den gewünschten Stützluftdruck aufrechterhält.

## Beschreibung

Die Erfindung betrifft ein Verfahren zur Herstellung von Flachflaschen durch freies Extrudieren eines Kunststoffschlauches, Blasen des extrudierten Kunststoffschlauches in einer Zwischenform zu einem Zwischenformling mit Kreisquerschnitt, Entlüften des Zwischenformlings, Übernehmen des Zwischenformlings in eine Endblasform und Fertigblasen des Zwischenformlings zu der Flachflasche.

Ein derartiges Verfahren sowie eine Extrusionsblasmaschine zu seiner Durchführung sind aus der DE-OS 37 02 844 bekannt. Ein Merkmal des bekannten Verfahrens besteht darin, daß der Durchmesser des Zwischenformlings erheblich größer als die von Breitseite zu Breitseite der Flachflasche gemessene Dicke derselben ist, weil der Zwischenformling, abgesehen von seinem Mündungsbereich, an jeder Stelle einen Umfang hat, der näherungsweise, zum Beispiel auf ± 20 % genau, dem Umfang der Flachflasche an der gleichen Stelle entspricht.

Bei dem bekannten Verfahren hängt der vor dem Öffnen der Zwischenform entlüftete Zwischenformling drucklos an der Blaspinole, während die Zwischenform weg- und die Endblasform heranfährt, sich dann schließt und hierbei während des Schließens den immer noch drucklosen Zwischenformling beginnt in die gewünschte Flachflasche umzuformen. Erst wenn die Endblasform vollständig geschlossen hat, kann der somit schon vorumgeformte Zwischenformling über die Blaspinole erneut mit Blasluft beaufschlagt und so die Umformung zu der fertigen Flachflasche zum Abschluß gebracht werden.

Um reproduzierbar zu Flachflaschen mit engtolerierten Abmessungen zu kommen, ist eine präzise Steuerung der dieses Verfahren durchführenden Extrusionsblasmaschine, unter anderem eine genaue Temperaturführung in den verschiedenen Stationen der Maschine, notwendig.

Der Erfindung liegt die Aufgabe zugrunde, das bekannte Verfahren so zu modifizieren, daß die Anforderungen an die Genauigkeit der Einstellung und Regelung der Verfahrensparameter gesenkt werden können und sich insbesondere auch beim Neuanfahren der Extrusionsblasmaschine ohne zeitraubende Optimierungsversuche Flachflaschen erzeugen lassen, deren Abmessungen innerhalb der vorgegebenen Toleranzen liegen.

Erfindungsgemäß wird hierzu vorgeschlagen, den Zwischenformling ab dem Zeitpunkt seiner Entlüftung in der Zwischenform bis zu dem Zeitpunkt seiner erneuten Beaufschlagung mit Blasluft in der vollständig geschlossenen Endblasform unter einem Stützluftdruck zu halten. Dies kann durch jede Maßnahme erreicht werden, die vor allem während des Schließens der Endblasform verhindert, daß aus dem Zwischenformling Luft entweicht.

Der Stützluftdruck kann auch einen Wert haben, der geringfügig über dem atmosphärischen Druck liegt, bei dem sich jedoch das Volumen des Zwischenformlings zwischen dem Öffnen der Zwischenform und dem Schließen der Endblasform noch nicht oder zumindest nicht merklich erhöht.

Eine andere Verbesserung des vorgeschlagenen Verfahrens besteht darin, den Stützluftdruck während des Schließens der Endblasform auf einem im wesentlichen konstanten Wert zu halten. Dies kann z. B. durch ein Ventil, insbesondere ein Drosselventil, erreicht werden, das während des Schließens der Endblasform aus dem Zwischenformling eine kontrollierte Luftmenge über den Blaskanal der Blaspinole entweichen läßt. So vorzugehen, empfiehlt sich vor allem, wenn das Volumen der Flachflasche wesentlich kleiner als das Volumen des Zwischenformlings ist.

Der Erfindung liegt die Erkenntnis zugrunde, daß die für die Abmessungstoleranzen der fertigen Flachflasche kritischste Phase diejenige ist, während derer der Zwischenformling drucklos an der Blaspinole hängt, während er von der sich schließenden Endblasform bereits umgeformt wird, wodurch zwangsläufig Luft aus seinem Inneren verdrängt wird und insbesondere über den Blasluftkanal der Blaspinole entweicht.

Das Verfahren nach der Erfindung kann z. B. dadurch verwirklicht werden, daß in der Blaspinole möglichst nahe an deren Blasöffnung ein fernbetätigbares Ventil angeordnet wird, das unmittelbar nach der Druckentlastung des Zwischenformlings in der Zwischenform geschlossen und erst unmittelbar vor der erneuten Blasluftbeaufschlagung des Zwischenformlings in der vollständig geschlossenen Endblasform wieder geöffnet wird.

Eine andere Möglichkeit besteht darin, an Stelle des normalen Blasluftventils der Blaspinole, das im druckentlasteten oder entlüfteten Zustand des Zwischenformlings dessen Innenraum statt wie zuvor mit der Druckluftquelle nun mit der freien Atmospähre verbindet, ein Ventil zu verwenden, das nach der Druckentlastung des Zwischenformlings durch Abblasen der Druckluft in die Atmosphäre diesen Weg wieder schließt und, gegebenenfalls über ein Hilfsventil, den Blaskanal der Blaspinole und damit den Innenraum des Zwischenformlings auf einem Stützluftdruck voreinstellbaren Wertes hält.

## Patentansprüche

1. Verfahren zur Herstellung von Flachflaschen durch freies Extrudieren eines Kunststoffschlauches, Blasen des extrudierten Kunststoffschlauches in einer Zwischenform zu einem Zwischenformling mit Kreisquerschnitt, Entlüften des Zwischenformlings, Übernehmen des Zwischenformlings in eine Endblasform und Fertigblasen des Zwischenformlings zu der Flachflasche, **dadurch gekennzeichnet**, daß der Zwischenformling ab dem Zeitpunkt seiner Entlüftung in der Zwischenform bis zu dem Zeitpunkt seiner in der vollständig geschlossenen Endblasform stattfindenden Beaufschlagung mit Blasluft unter einem Stützluftdruck gehalten wird.

2. Verfahren nach Anspruch 1, dadurch gekennzeichnet, daß der Stützluftdruck einen Wert hat, der geringfügig über dem atmosphärischen Druck liegt.

3. Verfahren nach Anspruch 1 oder 2, dadurch gekennzeichnet, daß der Stützluftdruck während des Schließens der Endblasform auf einem im wesentlichen konstanten Wert gehalten wird.

4. Extrusionsblasmaschine zur Durchführung des Verfahrens nach dem Anspruch 1, dadurch gekennzeichnet, daß in der Blaspinole möglichst nahe an deren Blasöffnung ein fernbetätigbares Ventil angeordnet ist, das unmittelbar nach der Druckentlastung des Zwischenformlings in der Zwischenform schließt und unmittelbar vor der erneuten Blasluftbeaufschlagung des Zwischenformlings in der Endblasform wieder öffnet.

5. Extrusionsblasmaschine zur Durchführung des Verfahrens nach Anspruch 2 oder 3, dadurch gekennzeichnet, daß der Blasluftkanal der Blaspinole mit einem Ventil verbunden ist, das den Innenraum des Zwischenformlings auf einem Stützluftdruck voreinstellbaren Wertes hält.
